# EUROPÄISCHE PATENTANMELDUNG

(11) **EP 2 600 009 A2**
(43) Veröffentlichungstag der Anmeldung: **05.06.2013**
(21) Anmeldenummer: 12195121.4
(22) Anmeldetag: 30.11.2012
(51) Int. Cl.: F04D 29/60

(54) **Vorrichtung zum Anschluss einer Pumpe an ein Rohrsystem**

(30) Priorität: 30.11.2011 DE 102011055853
(71) Anmelder: Gealan Formteile GmbH, 95145 Oberkotzau (DE)
(72) Erfinder: Saunus, Christian, 08223 Grünbach (DE); Pöhlmann, Thomas, 95233 Helmbrechts (DE); Buheitel, Christian, 95111 Rehau (DE)
(74) Vertreter: Fleuchaus, Michael A.

(57) **Zusammenfassung**

Vorrichtung zum Anschluss einer Pumpe (3) an ein Rohrsystem mit einem Trägerelement (1), wobei das Trägerelement einen Aufnahmebereich (2) für die Pumpe (3) aufweist, wenigstens zwei Verbindungselemente (4, 14), wobei das erste Verbindungselement (4) zur Fluidverbindung des Rohrsystems mit dem Zulauf der Pumpe (3) und das zweite Verbindungselement (14) zur Fluidverbindung des Ablaufs der Pumpe mit dem Rohrsystem dient, wobei das erste Verbindungselement (4) ein erstes Anschlusselement (5) zur Verbindung mit dem Rohrsystem und ein zweites Anschlusselement (6) zur Verbindung mit der Pumpe (3) aufweist, und das zweite Verbindungselement (14) ein drittes Anschlusselement (16) zur Verbindung mit der Pumpe (3) und ein viertes Anschlusselement (15) zur Verbindung mit dem Rohrsystem ausweist, und wobei wenigstens eines der beiden Verbindungselemente (4, 14) wenigstens einen ersten (8) und zweiten (9) Rohrabschnitt aufweist, wobei der erste Rohrabschnitt (8) längsverschieblich zwischen einer ersten und einer zweiten Position zumindest teilweise innerhalb des zweiten Rohrabschnitts (9) angeordnet ist und die beiden Rohrabschnitte (8, 9) mittels eines ersten Dichtelements (11) gegeneinander abgedichtet sind, und innerhalb des zweiten Rohrabschnitts (9) ein Anschlagelement (20; 60; 80) mit einem Sitz (21; 61; 81) zur Aufnahme des ersten Rohrabschnitts (8) in der ersten Position angeordnet ist, wobei der erste Rohrabschnitt (8) in der ersten Position öffnungsseitig mittels eines zweiten Dichtelements (12) dichtend verschlossen ist.

## Beschreibung

Die vorliegende Erfindung betrifft eine Vorrichtung zum Anschluss einer Pumpe an ein Rohrsystem. Insbesondere betrifft die vorliegende Erfindung eine Vorrichtung zum Anschluss einer Umwälzpumpe an ein Rohrsystem, wobei es die erfindungsgemäße Vorrichtung ermöglicht, ohne Konstruktive Maßnahmen am Rohrsystem vorzunehmen, Pumpen verschiedener Größen zu verwenden und darüber hinaus den Ein- und Ausbau bzw. einen Tausch der Pumpe zu erleichtern.

Bei Umwälzpumpen zum Einbau in Rohrsysteme, wie beispielsweise Heizungsanlagen, Wasserversorgungen, Solaranlagen und dergleichen handelt es sich häufig um Kreiselpumpen, die ein flüssiges Medium - zumeist Wasser - zumindest teilweise kontinuierlich durch das Rohrsystem fördern. Die Umwälzpumpe wird hierbei üblicherweise in das jeweilige Rohsystem integriert indem sie mit zwei korrespondierenden offenen Rohrabschnitten des Rohrsystems verbunden wird, bevorzugt schraubverbunden wird. Da die Rohre des Systems in der Regel aus starren Materialien wie Stahl, Edelstahl, Kupfer oder Kunststoff hergestellt sind, erfolgt üblicherweise bereits bei der Planung und Installation des Rohrsystems über den gewählten Abstand der offenen Rohrabschnitte das System eine Vorauswahl der zu verwendenden Umwälzpumpen hinsichtlich einer entsprechenden Bauhöhe. Bei Umwälzpumpen handelt es sich jedoch zumeist um Verschleißteile, die einem Ausfall unterliegen können und in folge dessen ausgetauscht werden müssen.

Des Weiteren unterliegen Umwälzpumpen einer steten technischen Weiterentwicklung, insbesondere in Bezug auf ihre Energieeffizienz. Basierend auf diesen Weiterentwicklungen kann der Austausch einer Pumpe unter Umständen auch unabhängig von einem Ausfall des Geräts erstrebenswert und gegebenenfalls sogar auch aufgrund gesetzlicher Regelungen, beispielsweise in Bezug auf erhöhte Anforderungen bezüglich der Energieeffizienz notwendig sein. Bei einem Austausch oder einer Nach- bzw. Umrüstung eines bestehenden Rohrsystems mit neuen Pumpen kann es auch vorkommen, dass die Ersatzgeräte andere Dimensionen, insbesondere Baulängen aufweisen, als die ursprünglich verbauten. In solchen Fällen ist es aufgrund des festen Abstands der offenen Rohrabschnitte bei üblichen Rohrsysteminstallationen erforderlich, das bestehende Rohrsystem durch zumeist kostenintensive konstruktive Maßnahmen umzurüsten, um das Ersatzgerät einsetzen und betreiben zu können. Anderenfalls bestünden von vorne herein Beschränkungen bei der Wahl des Ersatzgerätes auf ein solches mit der jeweils passenden Baulänge, was mitunter unerwünscht ist.

Ein weiterer Aspekt beim Austausch einer Pumpe - wie bei sämtlichen Arbeiten an einem mit Medium befüllten Rohrsystem - ist, dass die Fluidverbindung für den Austausch der Pumpe sowohl im Bereich des Pumpenvorlaufs als auch des Pumpennachlaufs unterbrochen werden muss um den Verlust an Medium möglichst gering zu halten und ein gegebenenfalls zeit- und/oder kostenaufwändiges Wiederbefüllen des Rohrsystems möglichst zu vermeiden.

Eine Möglichkeit zur Unterbrechung der Fluidverbindung ist die gezielte Vereisung entsprechender Rohrabschnitte, sofern die Platzverhältnisse und das verwendete Medium dies erlauben. Hierbei handelt es sich generell jedoch um ein aufwändiges und auch in Bezug auf die Dichtheit häufig unzufriedenstellendes Verfahren. Zur Vermeidung dieser Nachteile, werden bei Neuinstallationen von Rohrsystemen Absperrschieber in das Rohrsystem integriert, die eine manuelle Verriegelung der Fluidverbindungen ermöglichen. Eine Nachrüstung solcher Absperrschieber in bestehende Rohrsysteme ist häufig aufgrund Platzmangels nicht oder nur mit Aufwand zu bewerkstelligen und darüber hinaus kostenintensiv.

Nachtteilig bei der Verwendung von Absperrschiebern ist jedenfalls, dass das Erfordernis der manuellen Verriegelung beider Rohrabschnitte die Wahrscheinlichkeit eines Funktions- und/oder Bedienfehlers, also mangelhafter oder unterbliebener Verriegelung und so auch den Verlust von Medium als direkte Folge des Funktions- und/oder Bedienfehlers wesentlich erhöht. Ein weiterer Nachteil bei der Verwendung von Absperrschiebern ergibt sich aus dem erhöhten Platzbedarf der Installation, welcher neben dem für die verwendeten Armaturen benötigten Platz auch dadurch begründet wird, dass diese Montageraum benötigen , wodurch der Kompaktierung einer Rohrsysteminstallation klare Grenzen gesetzt sind. Die weitere Verkleinerung von Rohrsysteminstallationen ist allerdings insbesondere im Kontext kleiner Heizungsanlagen, wie sie beispielsweise in Wohnungseinheiten installiert werden erwünscht.

Schließlich ergibt sich bei herkömmlichen Rohrsysteminstallationen aus dem Umstand, dass die verwendeten Pumpen bzw. Umwälzpumpen in der Regel frei fliegend zwischen den offenen Rohrabschnitten bzw. deren Anschlusselementen montiert werden der Nachteil einer erschwerten Montage, da das Gerät bis zur endgültigen Fixierung durch die Anschlusselemente händisch in der entsprechenden Position gehalten werden muss.

Aufgabe der vorliegenden Erfindung ist es daher eine Vorrichtung zum Anschluss einer Pumpe und insbesondere einer Umwälzpumpe an ein Rohrsystem zur Verfügung zu stellen, welche die Nachteile des Standes der Technik wenigstens teilweise überwindet und insbesondere eine einfache Demontage und Montage von Pumpen auch bei mit Medium befüllten Rohrsystemen ermöglicht, insbesondere auch für den Fall, dass die Pumpen unterschiedliche Dimensionen, also beispielsweise Baulängen zwischen deren Anschlüssen aufweisen.

Diese und weitere Aufgaben werden durch eine Vorrichtung mit den Merkmalen des Anspruchs 1 gelöst. Weitere bevorzugte Ausführungsformen der vorliegenden Erfindung sind Gegenstand der Unteransprüche.

Demnach weist die erfindungsgemäße Vorrichtung zum Anschluss einer Pumpe an ein Rohrsystem wenigstens ein Trägerelement auf mit einem Aufnahmebereich für die Pumpe sowie wenigstens zwei Verbindungselemente, wobei das erste Verbindungselement zu Fluidverbindung des Rohrsystems mit dem Zulauf der Pumpe und das zweite Verbindungselement zur Fluidverbindung des Ablaufs der Pumpe mit dem Rohrsystem dient. Die Verbindungselemente weisen jeweils Anschlusselemente zur Verbindung mit dem Rohrsystem respektive der Pumpe auf. So weist das erste Verbindungselement ein erstes Anschlusselement zur Verbindung mit dem Rohrsystem und ein zweites Anschlusselement zur Verbindung mit der Pumpe auf. Das zweite Anschlusselement weist ein drittes Anschlusselement zu Verbindung mit der Pumpe und eine viertes Anschlusselement zur Verbindung mit dem Rohrsystem auf.

Die erfindungsgemäße Vorrichtung ist dadurch gekennzeichnet, dass wenigstens eines der beiden Verbindungselemente wenigstens einen ersten und einen zweiten Rohrabschnitt aufweist, wobei der erste Rohrabschnitt längsverschieblich zwischen einer ersten und einer zweiten Position zumindest teilweise innerhalb des zweiten Rohrabschnitts angeordnet ist und die beiden Rohrabschnitte mittels eines ersten Dichtelements gegeneinander abgedichtet sind, und dass innerhalb des zweiten Rohrabschnitts ein Anschlagelement mit einem Sitz zur Aufnahme des ersten Rohrabschnitts in der ersten Position angeordnet ist, wobei der erste Rohrabschnitt in der ersten Position öffnungsseitig mittels eines zweiten Dichtelements dichtend verschlossen ist. Hierdurch wird die Fluidverbindung des Verbindungselements unterbrochen; es erfolgt also kein Fluss mehr zwischen den beiden Rohrabschnitten und den damit in Verbindung stehenden ersten und zweiten bzw. dritten und vierten Anschlusselementen.

Erfindungsgemäß ist erkannt worden, dass man von der gesamten herkömmlichen Installationsanordnung mit fest positionierten offenen Rohrabschnitten bzw. deren Anschlusselementen sowie vor- und nachgeschalteten manuellen Absperrschiebern abweichen muss, um eine einfachere, schnellere und mit weniger Aufwand verbundene Montage von Pumpen zu ermöglichen, der überdies die Verwendung von Pumpen unterschiedlicher Dimensionen, also beispielsweise Baulängen erlaubt und darüber hinaus auch eine Verkleinerung des gesamten Pumpenanschlusssystems erlaubt. Dies wird in technisch überraschender Weise gemäß einem ersten Aspekt der Erfindung durch eine erfindungsgemäße Vorrichtung wie diese in den Ansprüchen definiert ist erreicht, wodurch ein multifunktionales Bauteil zur Verfügung gestellt wird, dessen Größe erheblich kleiner ausfällt sind als die Summe der entsprechenden, aus dem Stand der Technik bekannten Einzelkomponenten. Gleichermaßen wurde hierdurch eine Lösung ersonnen, die eine stark vereinfachte Montage und Wartung mit sich bringt.

Ein weiterer Aspekt der Erfindung sind in diesem Zusammenhang die nachfolgend im Rahmen des ersten Aspekts der Erfindung ausführlich beschriebenen Verbindungselemente, welche einerseits durch eine Längsverschieblichkeit zweier ineinander eingreifender Rohrabschnitte gekennzeichnet sind und andererseits dadurch, dass diese die Fluidverbindung des Verbindungselements in wenigstens einer Position der beiden Rohrabschnitte zueinander unterbrechen und somit kein Fluss zwischen den beiden Rohrabschnitten und den damit in Verbindung Anschlusselementen besteht. Diese Verbindungselemente stellen für sich genommen bereits eine erfinderische Teillösung des erfindungsgemäßen Problems dar, werden allerdings aus Gründen des verbesserten Zusammenhangs nachfolgend in Verbindung mit dem ersten Aspekt der Erfindung ausführlich beschrieben. Sämtliche dort gezeigten und beschriebenen Merkmale dieser Verbindungselemente sind allerdings auch in Alleinstellung ausführbar und tragen zur Lösung der erfindungsgemäßen Aufgabe entscheidend bei. Anschlusselemente im Sinne der vorliegenden Erfindung sind Elemente zur im wesentlichen Fluiddichten Verbindung von Rohren zumeist gleicher Querschnitte, wie beispielsweise Schraubverbindungen, insbesondere Schraubverbindungen mittels Überwurfverschraubungen oder mittels Flanschverschraubungen, Press- und/oder Spannverbindungen, Schweiß- oder Klebeverbindungen, Steckverbindungen und dergleichen. Hierbei sind im Sinne der Erfindung insbesondere für die jeweiligen Verbindungen mit den Pumpenanschlüssen lösbare Verbindungsysteme besonders bevorzugt. So könnten das zweite und dritte Verbindungselement beispielsweise als Verschraubung ausgestaltet sein, wobei die Anschlusselemente Überwurfmuttern aufweisen die in die Außengewinde der Pumpenanschlüsse eingreifen wobei zwischen Anschlusselement und Pumpenanschluss eine Flanschdichtung angeordnet ist, die durch die Verschraubung zwischen korrespondierenden Dichtflächen verspannt wird.

Erste und zweite Dichtelemente im Sinne der vorliegenden Erfindung sind Dichtungen die eine Relativbewegung der beiden Rohrabschnitte in deren Längsrichtung zueinander erlauben, wobei eine Abdichtung zwischen den sich gegeneinander bewegenden Flächen der beiden Rohrabschnitte erfolgt, sofern deren Abstand geringer ist als die Außendimensionen des Dichtungselements. Bevorzugte Dichtelemente im Sinne der vorliegenden Erfindung sind beispielsweise an den Rochabschnitten in Umfangsrichtung angeordnete Dichtungen wie beispielsweise O-Ringe, die vorzugsweise in einer Nut angeordnet sind, Teflon-Ringelemente, Simmerringe und dergleichen.

Die erfindungsgemäße Vorrichtung weist, wie zuvor beschrieben, wenigstens ein Verbindungselement auf, das in Längsrichtung des Verbindungselements, also im Wesentlichen parallel zur Strömungsrichtung des Mediums teleskopierbar ist und somit in seiner Länge variabel. Dabei ist bevorzugt, die Teleskopierbarkeit in den Aufnahmeraum "hinein" zu ermöglichen, also eine Variabilität des Abstandes zwischen zweitem um drittem Anschlusselement vorzusehen.

Hierdurch wird eine Variabilität der im der erfindungsgemäßen Vorrichtung zu verwendenden Pumpen erzielt, insbesondere hinsichtlich deren Baulänge, also deren Abstand zwischen den Anschlusselementen des Pumpenzulaufs und des Pumpenablaufs. Darüber hinaus kann der Montageraum für die einzusetzende Pumpe durch die Teleskopierbarkeit des oder der Verbindungselemente für die Montage oder Demontage vergrößert werden, wodurch eine vereinfachte Montage der Pumpe erzielt wird.

Eine weitere Erleichterung der Montage und insbesondere der Demontage von Pumpen bei mit Medium befüllten und erfindungsgemäßen Vorrichtungen verbundenen Rohrsystemen bietet die "Verschlussfunktionalität" der erfindungsgemäßen Verbindungselemente der erfindungsgemäßen Vorrichtung, wenn sich diese bzw. deren erste Rohrabschnitte in der ersten Position befinden, durch welche ein Abfluss von Medium aus dem Rohrsystem sogar im Falle eines Pumpenwechsels bei einem mit Medium befüllten System erforderlich wird. Dadurch könnte ein zeitaufwändiges Entleeren und Wiederbefüllen des Rohrsystems mit Medium vermieden werden.

Bei einer Weiterbildung der erfindungsgemäßen Vorrichtung ist darüber hinaus vorgesehen, dass das oder die Verbindungselemente beidseitig teleskopierbar ausgeführt sind, dass also eine Teleskopierbarkeit des Verbindungselements nicht nur in Richtung des Aufnahmebereichs oder in diesen hinein besteht sondern auch in Richtung des Rohrsystems, also sowohl in als auch entgegen der Strömungsrichtung des Mediums. Eine "Verschlussfunktionalität" ist dabei zwar beidseitig möglich, jedoch in den meisten Fällen nicht erforderlich, so dass im Falle der "äußeren Teleskopierbarkeit" des Verbindungselements, also der dem Rohrsystem zugewandten Teleskopierbarkeit lediglich zwei Rohrabschnitte vorgesehen sind, wobei der erste Rohrabschnitt längsverschieblich zumindest teilweise innerhalb des zweiten Rohrabschnitts angeordnet ist und die beiden Rohrabschnitte mittels eines ersten Dichtelements gegeneinander abgedichtet sind. Bei dieser Weiterbildung erfolgt eine gewisse Flexibilisierung der Anforderungen an die Genauigkeit der Installation des Rohrsystems und der diesbezüglichen Maßhaltigkeit, da Toleranzen durch die äußere Teleskopierbarkeit ausgeglichen werden können und somit auch eine Anbindung einer erfindungsgemäßen Vorrichtung an das Rohrsystem vereinfacht wird.

In einer Ausführungsform der erfindungsgemäßen Vorrichtung ist das Anschlagelement wenigstens abschnittsweise, also zumindest in einigen Bereichen, wie beispielsweise Abschnitten seines Umfangs mit dem zweiten Rohrabschnitt und/oder anderen Teilen des Verbindungselements verbunden. Die Verbindung kann hierbei form-, kraft- oder stoffschlüssig sein. Die Verbindung könnte durch ein Verschrauben, Verkleben, Verschweißen, Verpressen hergestellt werden oder aber durch eine integrale Fertigung, beispielsweise im Kunststoffspritzgussverfahren.

Unter Integralität im Sinne der vorliegenden Erfindung ist insbesondere auch eine Einstückigkeit zu verstehen, wie sie beispielsweise bei einer Herstellung von Teilen im Ein- oder Mehrkomponentenspritzgussverfahren erreicht werden kann oder aber durch das sogenannte Insert-Moulding. Einstückigkeit kann aber auch durch viele andere Herstellungsweisen erreicht werden, insbesondere spanende Herstellung eines Bauteils aus einem Stück.

In einer Ausführungsform der erfindungsgemäßen Vorrichtung umgreift der auf dem Anschlagelement angeordnete Sitz den ersten Rohrabschnitt in seiner ersten Position, wobei das zweite Dichtelement derart am ersten Rohrabschnitt außenliegend und/oder am Sitz innenliegend angeordnet ist, dass in dieser ersten Position der erste Rohrabschnitt und der Sitz des Anschlagelements Dichtflächen für das zweite Dichtelement bilden an welchen das Dichtungselement dichtend anliegt. Konkret könnte das zweite Dichtelement beispielsweise den ersten Rohrabschnitt im mit dem Sitz in der ersten Position überlappenden Bereich an dessen Umfang umlaufen; es könnte insbesondere in Form eines O-Ringes ausgebildet sein, wobei das Dichtelement über geeignete Mittel, wie etwa eine Nut, am ersten Rohrabschnitt fixiert sein beziehungsweise an der entsprechenden Position gehalten werden könnte. Das Dichtelement könnte in entsprechender Weise auch an der Innenseite des Sitzes in dem Überlappungsbereich angeordnet sein.

In einer alternativen Ausführungsform der erfindungsgemäßen Vorrichtung umgreift der erste Rohrabschnitt in seiner ersten Position den auf dem Anschlagelement angeordneten Sitz, wobei das zweite Dichtelement derart am ersten Rohrabschnitt innenliegend und/oder am Sitz außenliegend angeordnet ist, dass in dieser ersten Position der erste Rohrabschnitt und der Sitz des Anschlagelements Dichtflächen für das zweite Dichtelement bilden an welchen das Dichtungselement dichtend anliegt. Das zweite Dichtelement könnte beispielsweise den Sitz des Anschlagelements im mit dem Sitz in der ersten Position überlappenden Bereich an dessen Umfang umlaufen; es könnte insbesondere in Form eines O-Ringes ausgebildet sein, wobei das Dichtelement über geeignete Mittel, wie etwa eine Nut, am ersten Rohrabschnitt fixiert sein beziehungsweise an der entsprechenden Position gehalten werden könnte. Das Dichtelement könnte entsprechend auch an der Innenseite des ersten Rohrabschnitts in dem Überlappungsbereich angeordnet sein oder aber stirnseitig bezüglich des ersten Rohrabschnitts am den Sitz stützenden Anschlagelement.

In einer weiteren Ausführungsform der erfindungsgemäßen Vorrichtung ist am Anschlagelement wenigstens eine zumindest teilweise außerhalb des Bereichs der Öffnung des ersten Rohrabschnitts in seiner ersten Position angeordnete Durchführung vorgesehen , wobei die Durchführung in dieser ersten Position eine Fluidverbindung in einen von unter Anderem dem ersten und zweiten Dichtelement begrenzten Raum herstellt. Dieser Raum ist aufgrund der Anordnung der ersten und zweiten Dichtelemente sowie der entsprechenden Dichtflächen und Rohrabschnitte im übrigen im wesentlichen geschlossen und insbesondere - in der ersten Position des ersten Rohrabschnitts - nicht mit der Öffnung des ersten Rohrabschnitts fluidverbunden. Das durch die Durchführung in dem durch die beiden Dichtelemente anstehende Medium kann also nicht mit der Öffnung des ersten Rohrabschnitts kommunizieren, da ein entsprechender Durchfluss durch die Dichtwirkung des zwischen ersten Rohrabschnitt und Sitz in der ersten Position angeordneten zweiten Dichtelements unterbunden ist.

Bei einer Längsverschiebung des ersten Rohrabschnitts aus der ersten Position hin in Richtung der zweiten Position erfolgt zumindest ab einem gewissen Punkt ein Lösen des ersten Rohrabschnitts vom Sitz und damit eine Unterbrechung der Dichtwirkung des zwischen ersten Rohrabschnitt und Sitz in der ersten Position angeordneten zweiten Dichtelements. In Folge dessen kommt es zu einer Fluidverbindung der Durchführung und der Öffnung des ersten Rohrabschnitts, so dass Medium zwischen Durchführung und Öffnung des ersten Rohrabschnitts kommunizieren kann und somit eine Fluidverbindung durch das Verbindungselement vorliegt.

Die wenigstens eine Durchführung ist in diesem Fall also so angeordnet, dass sie in der ersten Position des ersten Rohrabschnitts zwischen den beiden Dichtelementen liegt, wobei der Sitz und der erste Rohrabschnitt in dieser Position Dichtflächen für das zweite Dichtelemente bilden und der erste Rohrabschnitt und das Anschlagelement oder der erste Rohrabschnitt und der zweite Rohrabschnitt Dichtflächen für das erste Dichtelement bilden. In einer aus der ersten Position ausgerückten Position des ersten Rohrabschnitts besteht vermittels der Durchführung eine Fluidverbindung zwischen dem zweiten Rohrabschnitt und dem ersten Rohrabschnitt wobei der erste Rohrabschnitt und das Anschlagelement oder der erste Rohrabschnitt und der zweite Rohrabschnitt Dichtflächen für zumindest das erste Dichtelement bilden.

Bei einer Weiterbildung der erfindungsgemäßen Vorrichtung sind Verriegelungsmittel vorgesehen, die eine Verriegelung oder Fixierung des ersten Rohrabschnitts in der ersten Position ermöglichen, so dass ein ungewolltes Bewegen des ersten Rohrabschnitts aus der ersten Position heraus sicher unterbunden werden kann. Die Verriegelungsmittel können dabei vielfältig ausgeführt sein, beispielsweise durch eine Bajonett-Verriegelung, bei der der erste Rohrabschnitt in der ersten Position relativ zum zweiten Rohrabschnitt um einen gewissen Rotationswinkel gedreht würde und hierdurch ein Eingreifen von Verriegelungszapfen in dafür vorgesehene Zapfenaufnahmen erfolgte. Zapfen und Zapfenaufnahmen können jeweils am zweiten Rohrabschnitt, am Verbindungselement und/oder am Trägerelement angeordnet sein. Eine Rotation des ersten Rohrabschnitts um den negativen Rotationswinkel würde wiederum zu einer Freigabe der Längsverschieblichkeit desselben führen. Weitere Verriegelungsmittel können durch ein den ersten Rohrabschnitt umgreifendes, beispielsweise in einer Nut eingelegtes und in seiner ersten Position fixierendes Klammerelement gebildet sein, wobei ein Abnehmen oder Abziehen des Klammerelementes wiederum zu einer Freigabe der Längsverschieblichkeit desselben führen würde. Das Klammerelement ist dabei lösbar mit dem zweiten Rohrabschnitt, dem Verbindungselement und/oder dem Trägerelement verbunden. Eine ähnliche Verriegelungsfunktion ist ebenso mit einem Verriegelungsstift erzielbar.

In einer weiteren Ausführungsform der erfindungsgemäßen Vorrichtung ist in wenigstens einem weiteren und vorzugsweise dem zweiten Verbindungselement ein Rückflussverhinderer angeordnet. Unter Rückflussverhinderer im Sinne der vorliegenden Erfindung werden Elemente verstanden, die den Durchfluss von Medium in nur einer Richtung freigeben und bei einer Umkehrung der Strömungsrichtung des Mediums selbsttätig schließen und dadurch den Rückfluss verhindern. Bei einer Strömungsrichtung des Mediums in "erlaubter" Durchflussrichtung erfolgt ein selbsttätiges öffnen, so dass Medium ungehindert fließen kann. Das Schließen eines Rückflussverhinderers gemäß der Erfindung wird dabei vorzugsweise dadurch bewirkt, dass ein Schließelement in einen korrespondierenden Dichtungssitz fällt, bewegt oder gedrückt wird und so wenigstens zeitweise eine fluiddichte Verbindung zwischen den Schließelement und dem Dichtungssitz auszubilden, wodurch ein weiterer Fluss von Medium durch den Rückflussverhinderer unterbunden wird. Geeignete Schließelemente sind hierbei beispielsweise eine Kugel, ein Kegel, eine Klappe oder eine Membran, die im Falle des Schließens an dem jeweiligen Dichtungssitz zur Anlage kommen

In einer Weiterbildung der erfindungsgemäßen Vorrichtung könnte ein Rückschlagventil als Rückflussverhinderer verwendet werden. Hierbei wird ein Schließelement in einer Richtung entgegen der erlaubten Strömungsrichtung durch eine Feder in den Dichtungssitz gedrückt, wobei eine Strömung von Medium in erlaubter Strömungsrichtung zu einer Bewegung des Schließelements entgegen der Federkraft aus dem Dichtungssitz heraus und damit einer Freigabe des Fluidstroms führt. Im Falle des Einsatzes eines Rückschlagventils im Pumpenablaufseitigen Verbindungselement wäre die Federkraft so dimensioniert, dass sie geringer ist als die durch den Pumpenbedingten Fluss auf das Schließelement wirkende Kraft in Strömungsrichtung, so dass das Schließelement bei arbeitender Pumpe aus dem Dichtungssitz gehoben und damit die Fluidverbindung freigegeben würde.

In einer weiteren bevorzugten Ausführungsform der erfindungsgemäßen Vorrichtung wird das Schließelement des Rückflussverhinderers durch eine Kugel, einen Kegel oder einen Zylinder gebildet, wobei keine Feder vorgesehen ist, die zu einer Kraftausübung auf die Kugel, den Kegel oder den Zylinder in Richtung des Dichtungssitzes führt. Vielmehr wirkt auf die Kugel, den Kegel oder den Zylinder - bei entsprechend vertikaler Ausrichtung des Rückflussverhinderers bzw. der diesen aufweisenden erfindungsgemäßen Vorrichtung - lediglich die Gravitation, so dass die Kugel, der Kegel oder der Zylinder bei ausbleibender Fluidströmung, wie beispielsweise beim Abschalten der Pumpe, allein durch die Gewichtskraft, also die auf sie/ihn wirkende Gravitation in den Dichtungssitz fällt und so die Fluidverbindung unterbrochen wird. Ein Rückstrom des Mediums ist damit unterbunden. Das Gewicht der Kugel, des Kegels oder des Zylinders ist so dimensioniert, dass es geringer ist als die durch den Pumpenbedingten Fluss auf die Kugel, den Kegel oder den Zylinder in der "erlaubten" Strömungsrichtung wirkende Kraft, so dass die Kugel, der Kegel oder der Zylinder bei arbeitender Pumpe entgegen der Gewichtskraft aus dem Dichtungssitz gehoben wird.

Durch den Rückflussverhinderer, der ebenfalls für sich genommen bereits einen Aspekt der Erfindung darstellt, wird, ebenso wie im Falle der Verschlussfunktionalität ein Auslaufen von Medium aus dem Rohrsystem vermieden wenn beispielsweise eine Wartung oder ein Wechsel der Pumpe des Systems erfolgen soll, das Rohrsystem aber mit Medium befüllt ist. Somit wird auch hierdurch, gegebenenfalls in Kombination mit der Verschlussfunktionalität der Verbindungselemente eine deutlich einfachere Montage und/oder Wartung solcher Systeme ermöglicht. Darüber hinaus wird durch die Rückflussverhinderung natürlich eine Vorzugsströmungsrichtung definiert und sicher gestellt, dass ein Fluss entgegen der Vorzugsströmungsrichtung nicht erfolgen kann.

In einer Weiterbildung dieser Ausführungsform ist die Beweglichkeit des Schließelements in Strömungsrichtung durch einen in den Strömungsverlauf eingebachten Zapfen begrenzt. Der Zapfen kann dabei beispielsweise an einem Kopfbereich zur Fixierung im entsprechenden Rohrabschnitt angebracht und ragt vorzugsweise radial nach innen gerichtet in diesen hinein. Der Kopfbereich ist dabei dazu vorgesehen in eine korrespondierende Durchführung am Rohrabschnitt eingesetzt und hierein fixiert zu werden. Die Durchführung kann dabei insbesondere so dimensioniert sein, dass sie eine hinreichend große Öffnung in dem entsprechenden Rohrabschnitt bildet, so dass das Schließelement, also die Kugel, der Kegel oder der Zylinder durch diese Öffnung hindurch eingebracht, ausgewechselt oder gewartet werden kann.

Gemäß einer weiteren Ausführungsform der erfindungsgemäßen Vorrichtung weist das Trägerelement innerhalb des Aufnahmeraums wenigstens ein Vorfixierungselement zur vorüber gehenden Fixierung der Pumpe innerhalb des Aufnahmeraums auf. Durch das wenigstens eine Vorfixierungslement kann die Pumpe während der Demontage oder Montage in der richtigen Position gehalten werden, so dass ein manuelles Halten der Pumpe bei der Demontage oder Montage unnötig ist und hierdurch die Montage deutlich erleichtert und beschleunigt wird. Durch eine entsprechende Ausgestaltung des wenigstens einem Vorfixierungslements könnte neben der Position auch die Einbaurichtung der Pumpe vorgegeben werden um so Montagefehler zu vermeiden. Das Vorfixierungslement könnte ferner in definierten Bereichen und Richtungen, vorzugsweise in Längsrichtung beweglich am Trägerelement angeordnet sein, um so eine weitere Erleichterung bei der Pumpenmontage, insbesondere durch die mögliche Interaktion mit Teleskopierbaren Verbindungselementen zu bewirken.

Bevorzugt umgreift das Vorfixierungselement die Pumpe wenigstens abschnittsweise. Das Vorfixierungselement könnte hierbei durch wenigstens ein teilweise elastisches Klammerelement in das die Pumpe durch ein einfaches Einschieben eingesetzt wird, durch zwei korrespondierende Komponenten eines Klettelements oder auch durch aus dem Trägerelemente hervorstehende, die Pumpe stützende Aufsatzelemente gebildet werden.

Gemäß einer bevorzugten Ausführungsform der erfindungsgemäßen Vorrichtung ist das Trägerelement aus Kunststoff gebildet. Besonders bevorzugt ist das Trägerelement aus thermoplastischen Kunststoffen gebildet, die im Ein- oder Mehrkomponentenspritzgussverfahren verarbeitbar sind, wobei das Trägerelement vorzugsweise mittels diese Verfahrens hergestellt ist und besonders bevorzugt einstückig ausgeführt ist.

Gemäß einer weiteren Ausführungsform der erfindungsgemäßen Vorrichtung ist wenigstens eines der Verbindungselemente und vorzugsweise der zweite Rohrabschnitt wenigstens teilweise als integraler Bestandteil des Trägerelements ausgebildet. Hierbei können beispielsweise rohrförmige Mittelteile der Verbindungselemente als integrale und vorzugsweise einstückig ausgeführte Bestandteile des Trägerelements ausgebildet sein, wobei die zum jeweiligen Verbindungselement zugehörigen Anschlusselemente ebenfalls zumindest teilweise integral mit den rohrförmigen Mittelteilen ausgebildet sein könnten, wobei hier eine Verwendung unterschiedlicher Materialien - beispielsweise Metall, insbesondere Messing oder Edelstahl, - für die Anschlusselemente vorteilhaft sein kann, um gegebenenfalls größere Kräfte bei Verschraubungen aufzunehmen. Die metallischen Anschlusselemente können dabei beispielsweise nach dem Insert-Moulding-Verfahren mit den rohrförmigen Mittelteilen bzw. dem Trägerelement integral verbunden werden, so dass hierbei eine fluiddichte und feste, dauerhafte Verbindung zwischen den Anschlusselementen und den rohrförmigen Mittelteilen bzw. der Trägerplatte erzielt wird. Eine Herstellung mittels Insert-Moulding kann in diesem Zusammenhang zwar von Vorteil sein, jedoch besteht darüber hinaus auch die Möglichkeit, die Verbindungen zwischen Trägerelement und insbesondere rohrförmigem Mittelteil durch andere form-, stoff- und/oder kraftschlüssige Verbindungsmethoden herzustellen.

Bei Ausgestaltungen, bei denen der zweite Rohrabschnitt als zumindest teilweise integraler Bestandteil des Trägerelements ausgebildet ist kann darüber hinaus der erste Rohrabschnitt und das zugehörige Anschlusselement vollständig aus Metall, beispielsweise Messing oder Edelstahl, gefertigt sein, wodurch ein Hybrid-Verbindungselement gebildet würde, welches zumindest einen aus Kunststoff gefertigten zweiten Rohrabschnitt und bevorzugt ein damit integral verbundenes Anschlagelement aufweisen würden und einen metallischen ersten Rohrabschnitt sowie vorzugsweise ebenfalls metallische Anschlusselemente, die mit dem ersten und zweiten Rohrabschnitt integral verbunden sind.

Die wenigstens teilweise Ausgestaltung der Verbindungselemente und/oder Anschlusselemente als integrale Bestandteile des Trägerelements reduziert zum einen die Zahl der herzustellenden und zu montieren Einzelteile, wodurch eine Erleichterung der Installation der Vorrichtung und der darin aufgenommenen Pumpe erzielt wird.

Die Merkmale der vorstehend ausgeführten Ausführungsformen der Erfindung können, soweit dies technisch nicht widersprüchlich ist, uneingeschränkt kombiniert werden und darüber hinaus mit weiteren vorteilhaften Merkmalen Komponenten innerhalb der erfindungsgemäßen Vorrichtung ergänzt werden. Hier sei beispielsweise genannt, dass an bzw. in den Verbindungselementen weitere Hydraulisch aktive und passive Bauteile wie beispielsweise Mischventile, manuelle und automatische Entlüftungseinrichtungen, Flusssensoren, Absperrventilelemente, Druck- und Temperatursensoren integriert werden können oder aber zumindest Anschlusselemente hierfür vorgesehen werden können.

Dementsprechend ist ein weiterer erfindungsgemäße Aspekt, welcher das erfindungsgemäße Problem löst und gleichzeitig eine vorteilhafte Weiterbildung darstellt eine sog. "Kompakthydraulik " oder Pumpengruppe, welche die oben im Einzelnen beschriebenen Komponenten der Erfindung wie Trägerelement, Verbindungselemente, etc. in einer Gesamtbaugruppe aufweist und wobei die Rohrsystemseitigen Anschlüsse, die wie oben in Verbindung mit den Verbindungselementen beschrieben ausgeführt sein können, zumindest Heizkörpervor- und Rücklauf sowie Heizungsvor- und Rücklauf sind und darüber hinaus in zumindest einem Verbindungselement ein Mischventil oder zumindest dessen Gehäuse vorgesehen ist und zudem an einer Komponente des Trägerelements ein Anschluss- oder Gehäuseelement für wenigstens einen Temperatursensor vorgesehen ist.

Weitere optionale Komponenten der Kompakthydraulikplatte können darüber hinaus integrierte Flusssensoren sein oder zumindest Anschluss- oder Gehäuseelemente zu deren Aufnahme, Drucksensoren oder zumindest Anschluss- oder Gehäuseelemente zu deren Aufnahme und/oder, vorzugsweise am bzw. im Bereich des Anschlusselements für den Heizkörperrücklauf angeordnet, ein automatisches Entlüftungssystem.

Weitere Merkmale der vorliegenden Erfindung ergeben sich aus der nachfolgenden detaillierten Beschreibung von Ausführungsbeispielen in Verbindung mit den Ansprüchen und den Zeichnungen. Hierbei zeigt:
- Fig. 1: eine schematische Darstellung der erfindungsgemäßen Vorrichtung mit einer montierten Pumpe;
- Fig. 2:: einen Querschnitt durch ein teleskopierbares Verbindungselement, bei dem einer der Rohrabschnitte als integraler Bestandteil des Trägerelements ausgebildet ist;
- Fig. 3:: einen Querschnitt durch eine Ausführungsform eines erfindungsgemäßen Verbindungselements mit Verschlussfunktionalität in fluidverbundenem (offenem) Zustand;
- Fig. 4: einen Querschnitt durch das Verbindungselement gemäß Fig. 3 in strömungsunterbrechendem (geschlossenem) Zustand;
- Fig. 5: eine Aufsicht auf das Anschlagelement des Verbindungselements gemäß Fig. 3 und 4;
- Fig. 6: einen Querschnitt durch eine weitere Ausführungsform eines Verbindungselements mit Verschlussfunktionalität in offenem Zustand;
- Fig. 7: einen Querschnitt durch das Verbindungselement gemäß Fig. 6 in geschlossenem Zustand;
- Fig. 8: einen Querschnitt durch eine weitere Ausführungsform eines Verbindungselements mit Verschlussfunktionalität in offenem Zustand;
- Fig. 9: einen Querschnitt durch das Verbindungselement gemäß Fig. 6 in geschlossenem Zustand;
- Fig. 10: einen Querschnitt durch ein Verbindungselement, bei dem einer der Rohrabschnitte als integraler Bestandteil des Trägerelements ausgebildet ist mit einem Rückflussverhinderer;
- Fig. 11:: einen Horizontalschnitt durch das Verbindungselement gemäß Fig. 10 im Bereich des Zapfens des Rückflussverhinderers.

Die nachfolgende Beschreibung verschiedener Ausführungsformen der Erfindung ist lediglich beispielhafter Natur und dient insbesondere der Erläuterung von wesentlichen Merkmalen der Erfindung anhand verschiedener Komponenten. Im Rahmen der Beschreibung verschiedener Ausführungsbeispiele sind gleiche Komponenten oder Komponenten mit entsprechenden Funktionen durch jeweils gleiche Bezugszeichen gekennzeichnet.

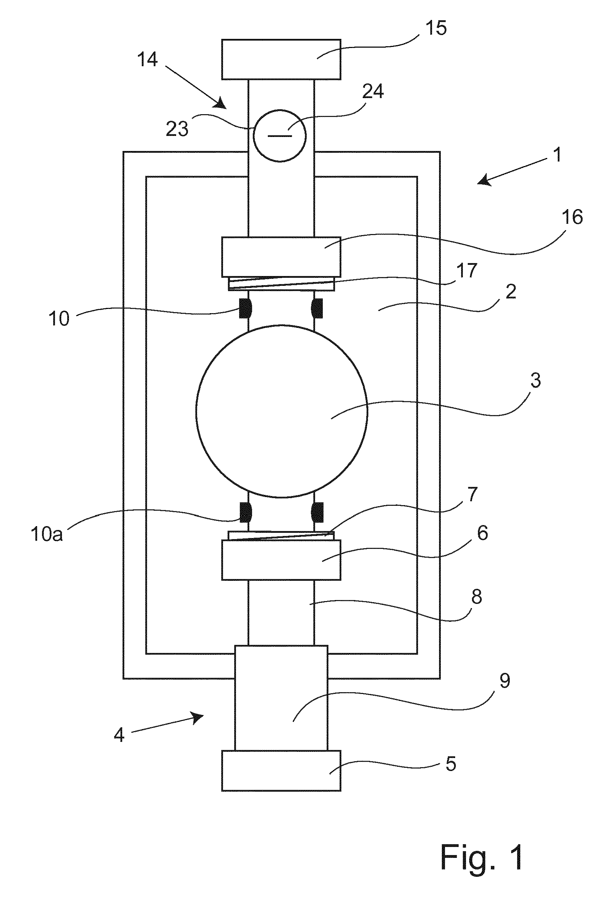

Figur 1 zeigt schematisch eine Aufsicht auf eine Ausführungsform der erfindungsgemäßen Vorrichtung zum Anschluss einer Pumpe 3 an ein Rohrsystem. Ein im Wesentlichen plattenförmiges Trägerelement 1 weist hierbei einen vorliegend im wesentlichen zentral angeordneten Aufnahmebereich 2 zur zumindest teilweisen Aufnahme einer Pumpe 3 auf.

An dem Trägerelement 1 angeordnet ist ein erstes Verbindungelement 4 und ein zweites Verbindungselement 14, wobei das erste Verbindungselement 4 ein erstes Anschlusselement 5 zur Verbindung mit dem Rohrsystem und ein zweites Anschlusselement 6 zur Verbindung mit dem Zulauf der Pumpe 3 aufweist und das zweite Verbindungselement 14 ein drittes Anschlusselement 16 zur Verbindung mit dem Ablauf der Pumpe 3 und ein viertes Anschlusselement 15 zur Verbindung mit dem Rohrsystem aufweist. Die Verbindungselemente 4 und 14 sind vorliegend zumindest teilweise einstückig mit dem Trägerelement 1 verbunden und bevorzugt mittels eines Kunststoffspritzgussverfahrens hergestellt.

Das zweite Anschlusselement 6 ist hierbei mit dem korrespondierenden Anschlusselement 7 des Pumpenzulaufs verbunden und das dritte Anschlusselement 16 ist mit dem korrespondierenden Anschlusselement 17 des Pumpenablaufs verbunden. Bei beiden Verbindungen handelt es such um reversible Schraubverbindungen, wie diese aus der Sanitär und Heizungsinstallation als Verschraubungen bekannt sind, wobei die Anschlusselemente 6, 16 Überwurfmuttern aufweisen und die Anschlusselemente 7, 17 der Pumpe 3 korrespondierende Gewinde aufweisen und die beiden jeweiligen Paare von Anschlusselemente 6, 7, 16, 17 mittels dieser Verschraubungen miteinander fluiddicht verbunden sind, wobei die Dichtwirkung durch geeignete Dichtmittel, wie beispielsweise Dichtungsringe erzielt wird.

Das Trägerelement weist des Weiteren zwei Teilabschnitte der Pumpe umgreifende, als elastische Klammern ausgebildete Vorfixierungselemente 10, 10a auf, durch welche die Pumpe auch ohne eine Fixierung mittels der Anschlusselemente 6, 7, 16, 17 in einer vorgegebenen Position gehalten wird, die vorzugsweise auch im wesentlichen die Montageposition ist.

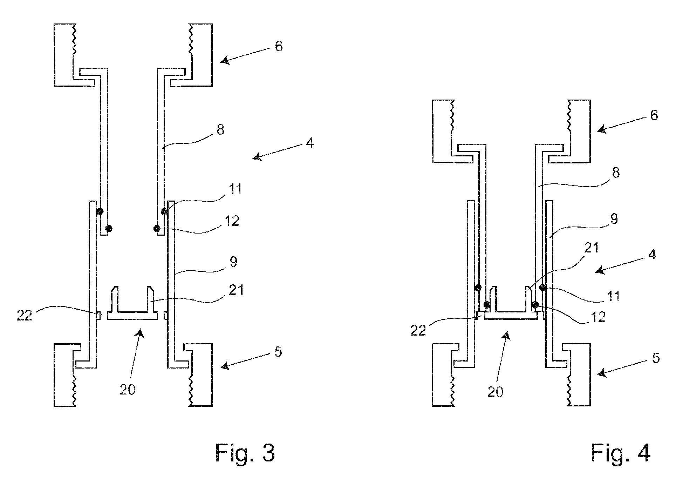

Das erste Verbindungselement weist einen ersten Rohrabschnitt 8 und einen zweiten Rohrabschnitt 9 auf, wobei der erste Rohrabschnitt 8 im zweiten Rohrabschnitt 9 längsverschieblich, also teleskopierbar angeordnet ist und die beiden Rohrabschnitte 8, 9 mittels eines ersten Dichtelements 11 gegeneinander abgedichtet sind. Der zweite Rohrabschnitt 9 ist vorliegend mit dem Trägerelement 1 einstückig ausgeführt. Das erste Verbindungselement weist optional eine, wie nachstehend unter Bezugnahme auf die Figuren 3 bis 9 beschriebene Verschlussfunktionalität auf.

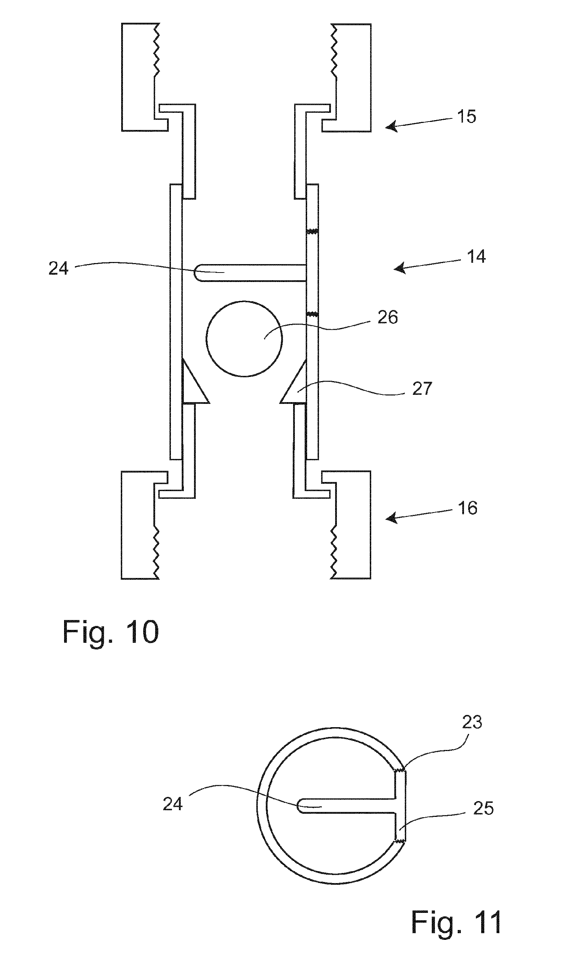

Das zweite Verbindungselement 14 umfasst einen Rückflussverhinderer, welcher wie detaillierter auch den Figuren 10 und 11 entnommen werden kann als Kugel 26 ausgeführt ist, die für den Fall, dass keine Strömung in Richtung des vierten Anschlusselements 15 durch das Verbindungselement vorliegt, beispielsweise bei angeschalteter Pumpe 3, aufgrund der auf sie wirkenden Gewichtskraft in den Dichtungssitz 27 fällt und so einen Rückfluss von Medium hin zum dritten Anschlusselement 16 verhindert. Für den Fall einer in Richtung des vierten Anschlusselements 15 vorliegenden Strömung, beispielsweise beim Betrieb der Pumpe 3, wird die Kugel 26 durch die Strömung, bzw. die hierdurch auf sie wirkenden dynamischen Auftriebskräfte aus dem Dichtungssitz 27 gehoben und damit eine Fluidverbindung durch das Verbindungselement 14 ermöglicht.

Dabei wird die Kugel 26 in ihrer Bewegung aufgrund der dynamischen Auftriebskräfte durch einen in den Strömungsverlauf eingebrachten Zapfen 24 begrenzt, in dem diese am Zapfen anstößt und hiervon gehalten wird. Der Zapfen 24 ist über einen damit verbundenen Kopfbereich 25 in einer korrespondierenden Durchführung 23 des Verbindungselements 14, in welches der Kopfbereich fluiddicht eingesetzt ist im Strömungsverlauf fixiert. Die Durchführung 23 im Verbindungselement 14 weist hierbei ein Innengewinde auf welches mit einem an dem Kopfbereich 25 des Zapfens angeordneten Außengewinde korrespondiert. Der Zapfen kann 24 so einfach in das Verbindungselement 14 eingeschraubt und, beispielsweise zu Wartungszwecken, auch entfernt werden.. Zur Verbesserung der Möglichkeit der Wartung des Rücklaufverhinderers ist die Durchführung 23 so dimensioniert, dass die als Schließelement für den Rückflussverhinderer dienende Kugel 26 entnommen und eingebracht werden kann.

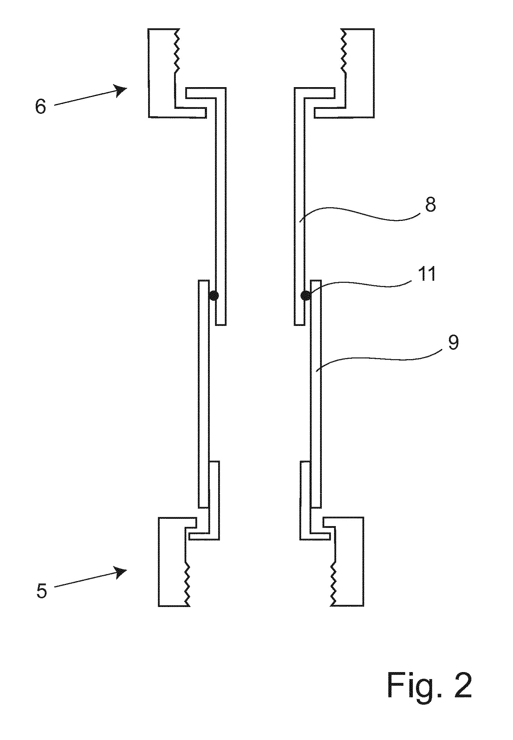

Figur 2 zeigt ein Verbindungselement ohne Verschlussfunktionalität, bei dem der zweite Rohrabschnitt 9 beispielsweise als integraler Bestandteil des Trägerelements 1 ausgebildet sein kann und ein zumindest teilweise in dem zweiten Rohrabschnitt 9 fluiddicht längsverschieblich angeordneter ersten Rohrabschnitt 8 vorgesehen ist. Der erste Rohrabschnitt 8 bildet mit dem zweiten Rohrabschnitt 4 eine teleskopierbare Einheit, bei der ein erstes Dichtelement 11 in form eines O-Rings zwischen den ineinander greifenden Rohrwandungen des ersten und zweiten Rohrabschnitts 8, 9 angeordnet ist. Das erste Dichtelement 11 ist hierbei in einer Nut am Außenumfang des ersten Rohrabschnitts 8 angeordnet um ein Verschieben des Dichtelements 11 aus seiner vorgegebenen Position heraus zu verhindern.

Wie gezeigt ist, ist der erste Rohrabschnitt 8 einstückig mit einem zweiten Anschlusselement 6 mit Überwurfmutter zur Verschraubung mit der Pumpe 3 verbunden. Demgegenüber ist das erste Anschlusselement 5 als gesondertes Element ausgeführt, mit einem kurzen rohrförmigen Abschnitt, mit welchem es im zweiten Rohrabschnitt 9 des Verbindungselements eingesetzt und dort vorzugsweise form-, stoff- und/oder kraftschlüssig fixiert ist. Das erste Anschlusselement 5 weist ebenfalls eine Überwurfmutter zur Verschraubung der Vorrichtung mit dem Rohrsystem auf.

Verbindungselemente gemäß der Erfindung können abweichend von der Figur 2 auch, anstelle des ersten Anschlusselements 5, welches mit dem zweiten Rohrabschnitt 9 verbunden ist, einen zweiten ersten Rohrabschnitt 8 aufweisen, der zum gezeigten ersten Rohrabschnitt 8 gegenüber liegend ebenfalls längsverschieblich und fluiddicht im zweiten Rohrabschnitt 9 vorgesehen ist. Hierdurch würde eine beidseitige Teleskopierbarkeit des Verbindungselements resultieren, was für den Fall eines einstückig mit dem Trägerelement 1 ausgeführten zweiten Rohrabschnitts 9 in gewissen Anwendungsfällen von Vorteil sein könnte.

Die in Verbindung mit dem Verbindungselement gemäß Figur 2 beschriebenen Eigenschaft, Merkmale und Funktionalitäten sind, soweit nicht abweichend ausgeführt, auf die nachfolgend näher beschriebenen Verbindungselemente mit Verschlussfunktionalität entsprechend anwendbar.

Figur 3 zeigt eine Ausführungsform eines ersten Verbindungselements 4 mit Verschlussfunktionalität in einer zweiten, offenen Position, mit einem ersten Rohrabschnitt 8 und einem zweiten Rohrabschnitt 9, wobei der erste Rohrabschnitt 8 im zweiten Rohrabschnitt 9 längsverschieblich angeordnet ist und die beiden Rohrabschnitte 8, 9 mittels eines ersten Dichtelements 11 gegeneinander abgedichtet sind. Das erste Dichtelement kann hierbei mittels einer Nut, in der das Dichtelement angeordnet ist am ersten Rohrabschnitt 8 fixiert sein.

Der erste Rohrabschnitt 8 weist darüber hinaus an seinem Innenumfang im Bereich der Rohröffnung des ersten Rohrabschnitts 8 ein umlaufendes zweites Dichtelement 12 auf, welches ebenfalls mittels einer Nut, in der das Dichtelement angeordnet ist, am ersten Rohrabschnitt 8 fixiert ist. Im zweiten Rohrabschnitt 9 ist ein im wesentlichen normal zur Richtung der Längsverschieblichkeit des ersten Rohrabschnitts 8 bzw. der Fluidströmungsrichtung orientiertes Anschlagelement 20 mit einem Sitz 21 zur Aufnahme des ersten Rohrabschnitts 8 und insbesondere dessen Öffnungsbereichs angeordnet. Vorzugsweise ist das Anschlagelement integral mit dem zweiten Rohrabschnitt gebildet, und einem einheitlichen Herstellungsverfahren, wie beispielsweise in einem Kunststoffspritzgussverfahren hergestellt.

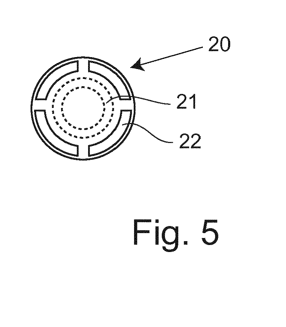

Das Anschlagelement 20 weist, wie sich auch der Fig. 5 entnehmen lässt, Durchführungen 22 auf, welche eine Fluidverbindung zwischen den durch das Anschlagelement 20 voneinander getrennten Innenbereichen des zweiten Rohrabschnitts 9 herstellen, so dass über das Anschlagelement 20 hinweg eine Strömung durch den zweiten Rohrabschnitt9 ermöglicht wird. Das Anschlagelement 20 ist, wie der Figur 5 zu entnehmen ist, so ausgestaltet, dass die Durchführungen 22 im wesentlichen konzentrisch zumindest teilweise um den topfförmigen Sitz 21 herum schlitzförmig angeordnet sind und bevorzugt auch von diesem beabstandet sind.

Figur 4 zeigt das in Figur 3 beschriebene Verbindungselement 34 in der ersten, die Fluidverbindung durch das Verbindungselement 34 unterbrechenden, also geschlossenen Position des ersten Rohrabschnitts 8. Das am Innenumfang des ersten Rohrabschnitts 8 angeordnete zweite Dichtelement 12 ist in dieser ersten Position mit der Wandung des topfförmigen Sitzes 21 in Kontakt gebracht, so dass die Außenfläche der Wandung des topfförmigen Sitzes 21 und die Innenumfangsfläche des ersten Rohrabschnitts 8 Dichtflächen bilden, zwischen denen das zweite Dichtelement 12 dichtend angeordnet ist. Die Wandung des topfförmigen Sitzes 21 greift bei einer Längsverschiebung des ersten Rohrabschnitts 8 in Richtung seiner ersten Position in die Öffnung des ersten Rohrabschnitts ein, wodurch der dichtende Kontakt zwischen Sitz 21 und erstem Rohrabschnitt 8 hervorgerufen wird.

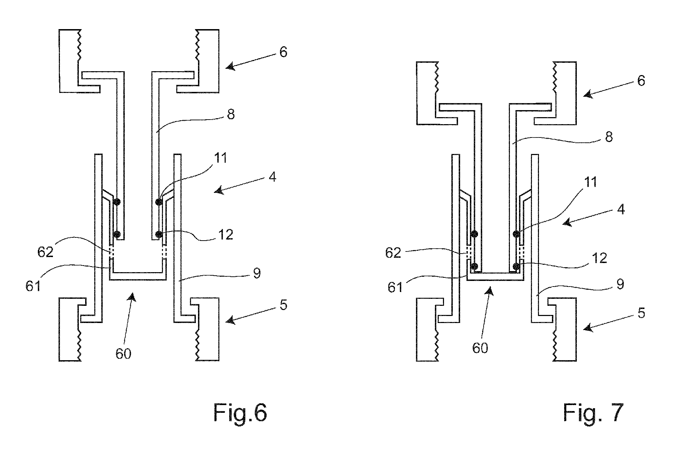

In dieser Position wird die Fluidverbindung zwischen zweitem und erstem Rohrabschnitt 9, 8 vermittels der Durchführungen 22 unterbrochen, da die Durchführungen 22 in dieser Position des ersten Rohrabschnitts 8 eine Fluidverbindung nur mehr in einen abgeschlossenen, von neben den Rohrwandungen des ersten und zweiten Rohrabschnitts 8, 9 dem ersten Dichtelement 11 und dem zweiten Dichtelement 12 begrenzen Raum herstellen. Eine Fluidkommunikation zwischen zweitem Rohrabschnitt 9 und Rohröffnung des ersten Rohrabschnitts 8 findet nicht mehr statt. Die Figuren 6 und 7 sowie 8 und 9 zeigen weitere Ausführungsformen eines ersten Verbindungselements 4 wobei aufgrund der großen Übereinstimmungen hinsichtlich strukturellen und funktionellen Merkmalen mit dem Verbindungselement 4 der Figuren 3 und 4 zur Vermeidung von Wiederholungen in wesentlichen Teilen auf die vorstehende Beschreibung verwiesen wird und lediglich abweichende Merkmale kurz unterstrichen werden sollen.

Bei dem Verbindungselement gemäß den Figuren 6 und 7 ist im zweiten Rohrabschnitt 9 ein topfartiges Anschlagelement 60 mit einem Sitz 61 zur Aufnahme des ersten Rohrabschnitts 8 angeordnet. Das Anschlagelement 60 ist dabei in dieser Ausführungsform so ausgestaltet, dass es topfförmig in den zweiten Rohrabschnitt 9 hineinragt und die "Topfwandung" mit dem zweiten Rohrabschnitt 9 einen doppelwandigen Bereich ausbildet. Innerhalb des topfförmigen Anschlagelements 60 ist der erste Rohrabschnitt 8 längsverschieblich angeordnet, wobei das erste Dichtelement 11 zwischen der Topfwandung und der Rohrwandung des ersten Rohrabschnitts 8 angeordnet ist und die Topfwandung so eine Führungshülse für den ersten Rohrabschnitt 8 bildet.

Das Anschlagelement 60 ist mit dem zweiten Rohrabschnitt 8 bzw. dessen Wandung fluiddicht verbunden und vorzugsweise form-, stoff- und/oderoder kraftschlüssig fixiert.. Der Sitz 61 des Anschlagelements 60 ist in dessen Bodenbereich angeordnet und das Anschlagelement weist oberhalb des Sitzes 61 Durchführungen 62 auf, die eine Fluidverbindung im zweiten Rohrabschnitt 8 über das Anschlagelement 60 hinweg herstellen.

Das zweite Dichtungselement 12 ist ebenfalls am Außenumfang des ersten Rohrabschnitts 8 angeordnet und zwar im Bereich der Rohröffnung des ersten Rohrabschnitts 8. Das zweite Dichtungselement ist so angebracht, dass im Falle des vollständigen Einschiebens des ersten Rohrabschnitts 8 bis in die erste Position eine Abdichtung zwischen dem Außenumfang des ersten Rohrabschnitts 8 und dem Innenumfang der Wandungsfläche des ebenfalls topfförmigen Sitzes 61 vermittels des zweiten Dichtelements 12 erfolgt. Die Durchführungen 62 stellen in dieser Position des ersten Rohrabschnitts 8 eine Fluidverbindung in einen unter Anderem von dem ersten Dichtelement 11 und dem zweiten Dichtelement 12 begrenzen, abgeschlossenen Raum her, wobei auf diese Weise keine Fluidkommunikation zwischen dem Raum und der Öffnung des ersten Rohrabschnitts mehr erfolgt. Wird der erste Rohrabschnitt 8 zusammen mit den hieran angeordneten Dichtungen 11, 12, welche gleichermaßen aber auch an der Innenwandung des Anschlagelements 60 bzw. Sitzes 61 angebracht sein können, aus der ersten Position heraus gezogen, so wird die durch das zweite Dichtelement 12 hervorgerufene Dichtwirkung aufgehoben und es erfolgt ein Fluidstrom zwischen zweitem Rohrabschnitt 9 und erstem Rohrabschnitt 8 vermittels der Durchführungen 62 und der Rohröffnung.

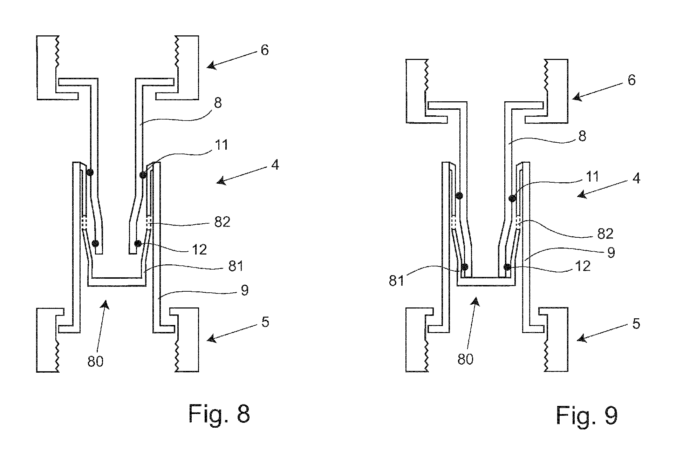

Das Verbindungselement mit Verschlussfunktionalität gemäß den Figuren 8 und 9 entspricht in seinem Aufbau in wesentlichen Teilen dem der Figuren 7 und 8, so dass hier zur Vermeidung von Wiederholungen lediglich die unterschiedliche Ausführung der Verläufe der Rohrdurchmesser des ersten Rohrabschnitts 8 und der Wandung des topfförmigen Anschlagelements 81 ausgeführt und im übrigen wiederum auf die vorstehende Beschreibung verwiesen sei. Wie gezeigt sind erstes und zweites Dichtelement 11, 12 in Bereichen unterschiedlichen Außendurchmessers des ersten Rohrabschnitts 8 angeordnet. Eine Anbringung der Dichtelemente an den Innenwandungen (ebenfalls unterschiedlichen Durchmessers, so dass diese mit den Durchmessern des ersten Rohrabschnitts im wesentlichen korrespondieren) des topfförmigen Anschlusselements 80 ist dabei gleichermaßen denkbar.

Wiederum ist der Sitz 81 des Anschlagelements 80 so ausgeführt, dass dieser den Öffnungsbereich des ersten Rohrabschnitts und das hier angeordnete zweite Dichtelement aufnimmt und hierdurch ein dichtender Sitz geschaffen ist. Der Sitz 81, der erste Rohrabschnitt 8 und das zweite Dichtungselement 12 haben dabei allerdings einen geringeren Durchmesser als die darüber liegenden Wandungsbereiche des Anschlagelements 80, so dass bei einer Bewegung des ersten Rohrabschnitts 8 aus der ersten Position in Richtung der zweiten Position eine Dichtwirkung des zweiten Dichtungselements 12 aufgrund des sich vergrößernden Durchmessers der Wandungen des Sitzes nicht länger erfolgt, ohne dass es aber einer Bewegung des Dichtelements über die oberhalb des Sitzes 81 angeordneten Durchführungen 82 bedarf, was zu Beschädigungen des zweiten Dichtelements 12 führen könnte. Die in den Figuren 8 und 9 gezeigte Ausführungsform des Verbindungselements stellt insoweit eine verbesserte Ausführungsform des in den Figuren 6 und 7 gezeigten Verbindungselements mit Verschlussfunktionalität dar.

## Patentansprüche

1. Vorrichtung zum Anschluss einer Pumpe (3) an ein Rohrsystem, insbesondere einer Umwälzpumpe, aufweisend:
ein Trägerelement (1), wobei das Trägerelement einen Aufnahmebereich (2) für die Pumpe (3) aufweist,
wenigstens zwei Verbindungselemente (4, 14), wobei das erste Verbindungselement (4) zur Fluidverbindung des Rohrsystems mit dem Zulauf der Pumpe (3) und das zweite Verbindungselement (14) zur Fluidverbindung des Ablaufs der Pumpe mit dem Rohrsystem dient, wobei
das erste Verbindungselement (4) ein erstes Anschlusselement (5) zur Verbindung mit dem Rohrsystem und ein zweites Anschlusselement (6) zur Verbindung mit der Pumpe (3) aufweist, und
das zweite Verbindungselement (14) ein drittes Anschlusselement (16) zur Verbindung mit der Pumpe (3) und ein viertes Anschlusselement (15) zur Verbindung mit dem Rohrsystem ausweist,
**dadurch gekennzeichnet, dass**
wenigstens eines der beiden Verbindungselemente (4, 14) wenigstens einen ersten (8) und zweiten (9) Rohrabschnitt aufweist, wobei der erste Rohrabschnitt (8) längsverschieblich zwischen einer ersten und einer zweiten Position zumindest teilweise innerhalb des zweiten Rohrabschnitts (9) angeordnet ist und die beiden Rohrabschnitte (8, 9) mittels eines ersten Dichtelements (11) gegeneinander abgedichtet sind, und
innerhalb des zweiten Rohrabschnitts (9) ein Anschlagelement (20; 60; 80) mit einem Sitz (21; 61; 81) zur Aufnahme des ersten Rohrabschnitts (8) in der ersten Position angeordnet ist, wobei der erste Rohrabschnitt (8) in der ersten Position öffnungsseitig mittels eines zweiten Dichtelements (12) dichtend verschlossen ist.

2. Vorrichtung nach Anspruch 1, **dadurch gekennzeichnet, dass** das Anschlagelement (20; 60; 80) wenigstens abschnittsweise mit dem zweiten Rohrabschnitt (9) verbunden ist.

3. Vorrichtung nach Anspruch 1 oder 2 , **dadurch gekennzeichnet, dass** der Sitz des Anschlagelements (60; 80) den ersten Rohrabschnitt (8) in der ersten Position umgreift und dass in der ersten Position der erste Rohrabschnitt (8) und der Sitz (61; 81) korrespondierende Dichtflächen für das zweite Dichtelement (12) bilden.

4. Vorrichtung nach Anspruch 1 oder 2, **dadurch gekennzeichnet, dass** der erste Rohrabschnitt (8) den Sitz (21) in der ersten Position des ersten Rohrabschnitts (8) umgreift und dass in der ersten Position der erste Rohrabschnitt (8) und der Sitz (21) korrespondierende Dichtflächen für das zweite Dichtelement (12) bilden.

5. Vorrichtung nach einem der vorstehenden Ansprüche, **dadurch gekennzeichnet, dass** das Anschlagelement (20; 60; 80) zumindest teilweise außerhalb des Bereichs der Öffnung des ersten Rohrabschnitts (8) in seiner ersten Position wenigstens eine Durchführung (22; 62; 82) aufweist wobei die Durchführung in dieser ersten Position eine Fluidverbindung in einen von dem ersten (11) und zweiten Dichtelement (12) begrenzten, im wesentlichen geschlossenen Raum herstellt.

6. Vorrichtung nacheinem der vorstehenden Ansprüche, **dadurch gekennzeichnet, dass** in wenigstens einem weitern und vorzugsweise im zweiten Verbindungselement (14) eine Rückflussverhinderer angeordnet ist.

7. Vorrichtung nach Anspruch 6, **dadurch gekennzeichnet, dass** der Rückflussverhinderer ein Rückschlagventil ist.

8. Vorrichtung nach Anspruch 6, **dadurch gekennzeichnet, dass** der Rückflussverhinder durch eine Kugel (26) gebildet wird, die bei ausgeschalteter Pumpe (3) allein durch Gravitation in den Dichtungssitz (27) fällt und das zweite Verbindungselement so fluiddicht verschließt.

9. Vorrichtung nach Anspruch 8, **dadurch gekennzeichnet, dass** die Beweglichkeit der Kugel (26) in Strömungsrichtung durch einen in den Strömungsverlauf eingebrachten Zapfen (24) begrenzt wird.

10. Vorrichtung nach einem der vorstehenden Ansprüche, **dadurch gekennzeichnet, dass** das Trägerelement (1) wenigstens ein Vorfixierungselement (10, 10a) zur Fixierung der Pumpe (3) innerhalb des Aufnahmeraums (2) aufweist.

11. Vorrichtung gemäß Anspruch 10, **dadurch gekennzeichnet, dass** das Vorfixierungselement (10, 10a) durch ein die Pumpe (3) abschnittsweise umgreifendes, wenigstens teilweise elastisches Klammerelement gebildet wird.

12. Vorrichtung nach einem der vorstehenden Ansprüche, **dadurch gekennzeichnet, dass** das Trägerelement (1) aus Kunststoff gebildet ist, vorzugsweise einstückig gebildet ist.

13. Vorrichtung nach Anspruch 12, **dadurch gekennzeichnet, dass** wenigstens eines der Verbindungselemente (4, 14) wenigstens teilweise als integraler Bestandteil des Trägerelements (1) ausgebildet ist

14. Vorrichtung nach Anspruch 13, **dadurch gekennzeichnet, dass** zumindest der zweite Rohrabschnitt (9) als integraler Bestandteil des Trägerelements (1) ausgebildet ist.

15. Vorrichtung nach einem der vorhergehenden Ansprüche, **dadurch gekennzeichnet, dass** das im zweiten Rohrabschnitt (9) angeordnete Anschlagelement (20; 60; 80) mit Sitz (21; 61; 81) zur Aufnahme des ersten Rohrabschnitts (8) als integraler Bestandteil des zweiten Rohrabschnitts (9) ausgebildet ist.
